# EUROPÄISCHE PATENTSCHRIFT

(11) **EP 0 356 834 B1**
(45) Veröffentlichungstag und Bekanntmachung des Hinweises auf die Patenterteilung: **15.11.1995**
(21) Anmeldenummer: 89115253.0
(22) Anmeldetag: 18.08.1989
(51) Int. Cl.: B60L 5/22

(54) **Wippe mit einzeln gefederten Schleifstückaufhängungen für Stromabnehmer elektrisch angetriebener Fahrzeuge mit Oberleitungsversorgung**
Pantograph with individually sprung slippers for the current collectors of electrically propelled vehicles with overhead line supply
Pantographe à supports de patin à ressort individuel pour prise de courant de véhicules à propulsion électrique avec alimentation par ligne aérienne

(30) Priorität: 25.08.1988 DE 3828890
(43) Veröffentlichungstag der Anmeldung: 07.03.1990
(73) Patentinhaber: DOZLER GMBH, D-85511 Ottobrunn (DE)
(72) Erfinder: Lengfelder, Edmund, Prof.-Dr., D-8000 München 82 (DE)
(74) Vertreter: Heusler, Wolfgang, Dipl.-Ing.

(56) Entgegenhaltungen:
- DE-A- 2 459 250
- DE-A- 3 104 678
- DE-C- 551 782
- US-A- 2 512 329

## Beschreibung

Die Erfindung betrifft eine Wippe mit einzeln gefederten Schleifstückaufhängungen für Stromabnehmer elektrisch angetriebener Fahrzeuge mit Oberleitungsversorgung gemäß den Oberbegriffen der Ansprüche 1 und 9.

Bei Stromabnehmern elektrisch angetriebener Fahrzeuge mit Oberleitungsversorgung wird angestrebt, daß sich die Anpreßkraft (damit auch der Kontaktdruck) zwischen dem Fahrdraht und dem Schleifstück innerhalb eines definierten Bereichs bewegt. Im Fahrbetrieb kommen sowohl durch statische und dynamische Fahrdrahthöhenschwankungen als auch durch Höhenbewegungen des Fahrzeugs und des Stromabnehmers ständig veränderte Anpreßkräfte zustande. Diese führen sowohl bei Erhöhung der Anpreßkraft als auch bei starker Reduzierung der Anpreßkraft bzw. beim Abheben des Schleifstücks vom Fahrdraht (wegen der dadurch bedingten Erwärmung bzw. Lichtbogenbildung) zum erhöhten Materialverschleiß am Schleifstück und am Oberleitungssystem. Das Laufverhalten von Schleifstücken und die Gleichförmigkeit der Anpreßkraft werden dadurch verbessert, daß die gefederten Massen möglichst klein gehalten werden. Dies wird dadurch erreicht, daß Schleifstücke am Wippenchassis einzeln, d. h. unabhängig voneinander gefedert aufgehängt werden. Solche einzeln gefederte Aufhängungen sind in verschiedenen Ausführungsformen bekannt.

Als Wippenchassis ist jedes Konstruktionsteil zu verstehen, welches als Trägerelement einerseits die Verbindung zu Schleifstücken, andererseits die Verbindung zum Oberarm des Stromabnehmers herstellt. In diesem Sinne kann auch ein Scheitelrohr mit angefügten Teilen ein Wippenchassis sein.

Die Wippe ist in der Regel über ein Scheitelgelenk beweglich mit dem Oberarm des Stromabnehmers verbunden. Es ist bekannt, die Wippe im Scheitelpunkt des Stromabnehmers drehbar zu lagern, so daß sie sich zum Fahrdraht selbst ausrichtet. Der Kippwinkel der Wippe wird durch Vorrichtungen auf ca. ± 10 - 20° begrenzt. Bei Einholmstromabnehmern, bei denen die Wippe aus starr miteinander verbundenen Schleifstücken besteht, erfolgt die Anlenkung der Wippe mit Hilfe einer Wippenlenkerstange, verbunden mit einem Freilaufsystem. Bei Wippen mit einzeln gefederten Schleifstücken ist die weitgehend starre Anlenkung der Wippe Voraussetzung, um die Vorteile der Einzelfederung zu nutzen. Bekannt ist hierbei die Verwendung einer starren Wippenlenkerstange mit starrem Anlenkpunkt an der Wippe. Bekannt ist auch die Verwendung einer gefederten und gedämpften Wippenlenkerstange oder eines gefederten Anlenkpunktes an der Wippe.

Aus AT-PS 197865 ist eine Schleifstückaufhängung mit Parallelogrammführung bekannt, bei der sich die Lenker über Hebel und Federn gegeneinander abstützen, weshalb in diesem Falle eine unabhängige Einzelfederung nicht zustandekommt.

Aus US-PS 2512329 ist eine einzeln gefederte Schleifstückaufhängung mit Parallelogrammführung unter Verwendung von Gelenken und starren Lenkern bekannt, bei der die Einleitung der Federkraft dadurch erfolgt, daß Gelenke als Gummitorsionselemente ausgebildet sind. Dieses System ist insbesonders dadurch nachteilig, daß bei Gummitorsionselementen eine Einstellbarkeit der Federungskennlinie nicht möglich ist und die Federungscharakteristik mit den jahreszeitlichen Temperaturschwankungen erheblichen Veränderungen unterworfen ist.

Verschiedene Ausführungen von einzeln gefederten Schleifstückaufhängungen unter Verwendung von eingespannten Blattfedern, die zugleich als Längslenker dienen, wie sie z.B. in GB-619718, AT-334419, DE-A-3104678 und der oben schon erwähnten US-A-2512329 beschrieben sind, weisen Nachteile im Auftriebsverhalten und in der Anpassung der Federcharakteristik auf. In DE-A-3138264 werden zur Vermeidung dieser Nachteile Stabfedern verwendet, die durch Rollen abgestützt und in einem weitgehend geschlossenen Profil untergebracht sein können. Diese Lösung erscheint jedoch durch eine eingeschränkte Stabilität der Seitenführung und durch Vereisungsgefahr innerhalb des Abdeckrohrs mit Nachteilen behaftet.

Aus der DE-C-551782 ist eine Wippe der hier betrachteten Gattung mit einzeln gefederten Schleifstückaufhängungen bekannt, die aus einem Schleifstückträger und einer damit verbundenen Parallelogrammführung bestehen, wobei die Parallelogrammführung starre Trägerlenker aufweist, die mit jeweils einem Traggelenk auf der einen Seite mit dem Wippenchassis und auf der anderen Seite mit dem Schleifstückträger verbunden sind. Bei dieser bekannten Wippe ist eine Zugfeder zwischen dem am Schleifstückträger befindlichen Traggelenk des einen Lenkers der Parallelogrammführung und dem am Wippenchassis befindlichen Träggelenk des anderen Lenkers angeordnet, also in einer Diagonalen der Parallelogrammführung. Die Feder ist an einem Schraubbolzen befestigt, der mit am Wippenchassis drehbar befestigten Muttern verschraubt wird, so daß durch Drehen der Schraube die Spannung der Feder eingestellt und damit der Anpreßdruck der Schleifstücke geregelt werden kann. Eine Anpassung der Federungskennlinie an die jeweiligen Erfordernisse ist damit nicht möglich.

Es ist Aufgabe der Erfindung, diesen Gesichtspunkten Rechnung zu tragen und eine Wippe mit einzeln gefederter Schleifstückaufhängung zu schaffen,
- die in Fahrtrichtung gesehen die Parallelität der Schleiffläche jedes Schleifstücks zum Fahrdraht bei jeder Neigung des Fahrdrahtes über den gesamten Weg der Federung gewährleistet,
- die schnelle Vertikalbewegungen des Schleifstücks ermöglicht,
- die eine einfach durchzuführende Anpassung der Federungskennlinie der Schleifstückaufhängung an die Oberleitungs-, Stromabnehmer- und Wagenkastenmerkmale zuläßt,
- durch die eine Dämpfung der gefederten Bewegung des Schleifstücks erfolgt oder auf einfache Weise ermöglicht wird.

Die Erfindungen, wie sie in den Ansprüchen 1 und 9 offenbart sind, lösen die vorgenannten Aufgaben und führen dadurch zu erheblichen Verbesserungen gegenüber bekannten Konstruktionen.

Der Vorteil der Erfindungen besteht darin, daß bei der als Parallelogrammführung aus Gelenken und starren Lenkern ausgebildeten Schleifstückaufhängung die Federkraft, in Abhängigkeit von der Anforderung, an vielen Punkten des jeweiligen Trägerlenkers, des Schleifstückträgers, und des Wippenchassis eingeleitet werden kann. Durch die Wahl der Lage der Einleitungspunkte der Federkraft zueinander lassen sich auf einfache Weise lineare, progressive und degressive Federungskennlinien verwirklichen.

Erfindungsgemäß werden Federkräfte an zumindest einem Trägerlenker oder Schleifstückträger je Aufhängung eingeleitet. Der andere Angriffspunkt jeder verwendeten Feder liegt am Wippenchassis, an einem weiteren Trägerlenker oder am Schleifstückträger. Innerhalb einer Schleifstückaufhängung erfolgt die Einleitung von Federkräften an starren Teilen, die über mindestens ein Gelenk miteinander in Verbindung stehen. Als Federn kommen Ausführungen wie Zug-, Druck-, Biege-, Spiral- und Torsionsfedern, aber auch Gasfedern in Frage. Bezogen auf die Einleitung der Federkraft wird ein Trägerlenker als zweiarmiger oder als mehrarmiger Hebel ausgeführt. Durch die Wahl des Hebelwinkels, den einerseits die Linie zwischen den Lenkergelenken an den Enden jeweils eines Trägerlenkers und andererseits die Linie zwischen dem Lenkergelenk am Wippenchassis und dem Angriffspunkt der Feder am Trägerlenker bildet, wird erfindungsgemäß die Federungskennlinie der Schleifstückaufhängung gestaltet. Die Federungskennlinie kann erfindungsgemäß auch durch die Wahl des Federkrafteinleitungspunkts am Wippenchassis festgelegt werden.

Die Trennung von Federelement und Parallelogrammführung bringt den erfindungsgemäßen Vorteil, daß auf einfache, schnelle und preisgünstige Weise, nämlich durch den Ersatz einer Feder durch eine andere, die Federungscharakteristik der Schleifstückaufhängung den Anforderungen entsprechend verändert werden kann. Die Verwendung starrer Trägerlenker hat den erfindungsgemäßen Vorteil, daß Profile mit geringstem Auftriebsverhalten - im Gegensatz zu Trägerlenkern aus Blattfedern - verwendet werden können.

Die Dämpfung der einzeln gefederten Schleifstückaufhängung wird bei Ausgestoltungen der Erfindung vorteilhaft dadurch erreicht, daß Traggelenke als Gleitlager ausgebildet werden oder daß die gelenkig verbundenen Teile zusätzlich mit gegeneinander gleitenden Flächen ausgestattet oder mit solchen verbunden sind. In Abhängigkeit von der gewünschten Dämpfungscharakteristik werden die im Gleitlager oder die bei den Gleitflächen verwendeten Materialpaarungen, z. B. Metall/Kunststoff, nach ihren Reibungskoeffizienten ausgewählt und die Reibung zwischen den gleitenden Flächen, insbesondere auch der Slip-Stick-Effekt, zur Dämpfung genutzt. Im Rahmen weiterer Ausgestaltungen der Erfindung kann zur Dämpfung in die Gelenkspalte des Gleitlagers oder zwischen die Gleitflächen oder, wenn das Traggelenk mit einem Wälzlager ausgestattet ist, in dieses ein Stoff eingebracht werden, der durch seine Viskosität die gewünschten Dämpfungsmerkmale bewirkt. Werden andere Elemente, z. B. pneumatische oder hydraulische, zur Dämpfung der einzeln gefederten Schleifstückaufhängung verwendet, so werden deren Aufhänge- bzw. Angriffspunkte nach den gleichen Prinzipien angeordnet, wie sie bei den auf die Trägerlenker oder Schleifstückträger wirkenden Federn Gegenstand der Erfindung sind.

Gemäß der im Anspruch 9 offenbarten Erfindung können Traggelenke auch dadurch gebildet werden, daß eine oder mehrere Biegefedern aus einem metallischen oder nichtmetallischen Werkstoff verwendet werden, welche am Trägerlenker und am Wippenchassis bzw. am Schleifstückträger und am Schleifstück befestigt sind. Bei einzeln gefederten Schleifstücken ist zwischen Schleifstückträger und Schleifstück ebenfalls ein Gelenk anzuordnen, um ein Verkanten bei einseitigem Einfedern der Schleifstückaufhängung zu verhindern. Dieses Gelenk wird erfindungsgemäß als Traggelenk unter Verwendung von Biegefedern gebildet, die gleichzeitig auch den beim einseitigen Einfedern des Schleifstücks erforderlichen Längenausgleich zwischen den beiden Aufhängungen eines Schleifstücks ermöglichen. Die an den beiden Enden eines Schleifstücks angeordneten Schleifstückaufhängungen bilden mit dem zugehörigen Schleifstück ebenfall eine Parallelogrammführung gemäß der Erfindung.

Die Dämpfung der Kippbewegung der Wippe wird dadurch bewirkt, daß zumindest ein Anlenkpunkt der Wippe, z. B. Scheitelgelenk oder Lenkerstangengelenk, als Traggelenk gemäß Anspruch 4 und 8 ausgebildet und mit den entsprechenden Gleitflächen verbunden ist. Allerdings ist diese Dämpfung wesentlich härter einzustellen als die Dämpfung bei den Traggelenken der Schleifstückaufhängungen. Damit wird erreicht, daß die Schleifstücke schnelle und kurze Federbewegungen ausführen können, ohne daß die Wippe ihren Kippwinkel ändert. Eine Anpassung des Wippenkippwinkels erfolgt erst, wenn höhere Kräfte, besonders über vergleichsweise längere Zeit, auf dem Weg über die Schleifstückaufhängungen in die Wippe eingeleitet werden.

Nachstehend sind Ausführungsbeispiele beschrieben und durch Zeichnungen erläutert.

Es zeigen
Fig. 1 bis Fig. 4 eine Seitenansicht einer einzeln gefederten Schleifstückaufhängung mit einem Wippenchassis und einer unterschiedlichen Anordnung von Federn,
Fig. 5 eine Ansicht von oben auf eine einzeln gefederte Schleifstückaufhängung mit einer Torsionsfeder,
Fig. 6 die Ausführung eines Traggelenks als Biegefedergelenk,
Fig. 7 die Teilansicht einer Schleifstückaufhängung mit Biegefeder-Traggelenken.

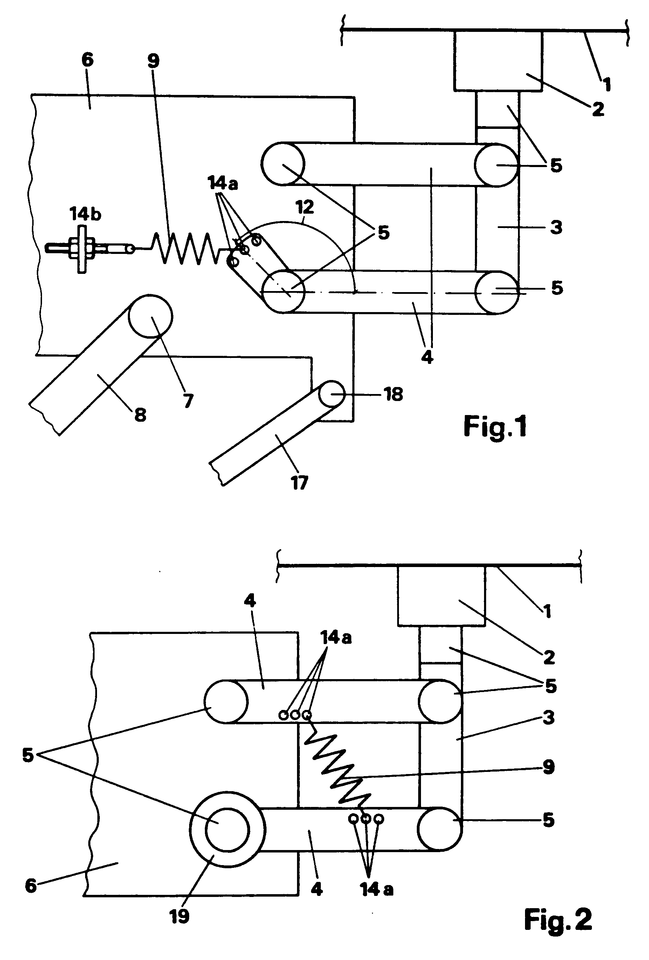

Fig. 1 zeigt eine als Prallelogrammführung ausgebildete einzeln gefederte Schleifstückaufhängung. Der Schleifstückträger (3) ist mit dem Wippenchassis (6) über 2 starre Trägerlenker (4) gelenkig verbunden. Die Trägerlenker weisen an den Enden jeweils ein Traggelenk (5) auf, mit dem sie an der einen Seite mit dem Wippenchassis (6), auf der anderen Seite mit dem Schleifstückträger (3) verbunden sind. Der Schleifstückträger (3) ist über ein weiteres Traggelenk (5) mit dem Schleifstück (2) verbunden. Dieses Traggelenk ist mit seiner Drehachse gegenüber den an den Trägerlenkern (4) befindlichen Traggelenken um 90° gedreht angeordnet. Das Schleifstück (2) liegt am Fahrdraht (1) an. Die Federkraft einer Zugfeder (9) wird einerseits über definierte, in Abstufungen wählbare ßefestigungspunkte (14a) in den als zweiarmiger Hebel ausgebildeten unteren Trägerlenker eingeleitet.

Der andere kontinuierlich einstellbare Befestigungspunkt (14b) der Feder (9) befindet sich am Wippenchassis (6). Durch die Wahl der Befestigungspunkte (14a) am Trägerlenker wird gleichzeitig der Hebelwinkel (12) bestimmt. Durch diesen kann die Federungskennlinie der Schleifstückaufhängung entscheidend beeinflußt werden. Die Anordnung in Fig. 1 ergibt eine progressive Federungskennlinie. Ferner sind in Fig. 1 die Anlenkpunkte der gesamten Wippe dargestellt, die über das Scheitelgelenk (7) mit dem Oberarm (8) des Stromabnehmers und über das Lenkerstangengelenk (18) mit der Lenkerstange (17) verbunden ist. Über diese Anlenkpunkte wird die Wippe in ihrer Lage gehalten, so daß ein Einfedern der einzelnen Schleifstückaufhängung möglich ist.

Fig. 2 zeigt die Anordnung einer Zugfeder (9) zwischen den beiden Trägerlenkern (4) der einzeln gefederten Schleifstückaufhängung, die Federungskennlinie ist hier degressiv. Das Ausmaß der Degressivität kann durch die in Abstufungen wählbaren Befestigungspunkte (14a) festgelegt werden. Das chassis-seitige Traggelenk des unteren Trägerlenkers ist mit einer zusätzlichen Gleitfläche (19) versehen. Die Gleitfläche wird durch eine scheibenförmige Verbreiterung der dem Wippenchassis zugewandten Seite des Trägerlenkers im Bereich des Traggelenks gebildet. Die Reibung dieser Gleitfläche auf der Fläche des Wippenchassis wird zur Dämpfung der einzeln gefederten Schleifstückaufhängung genützt.

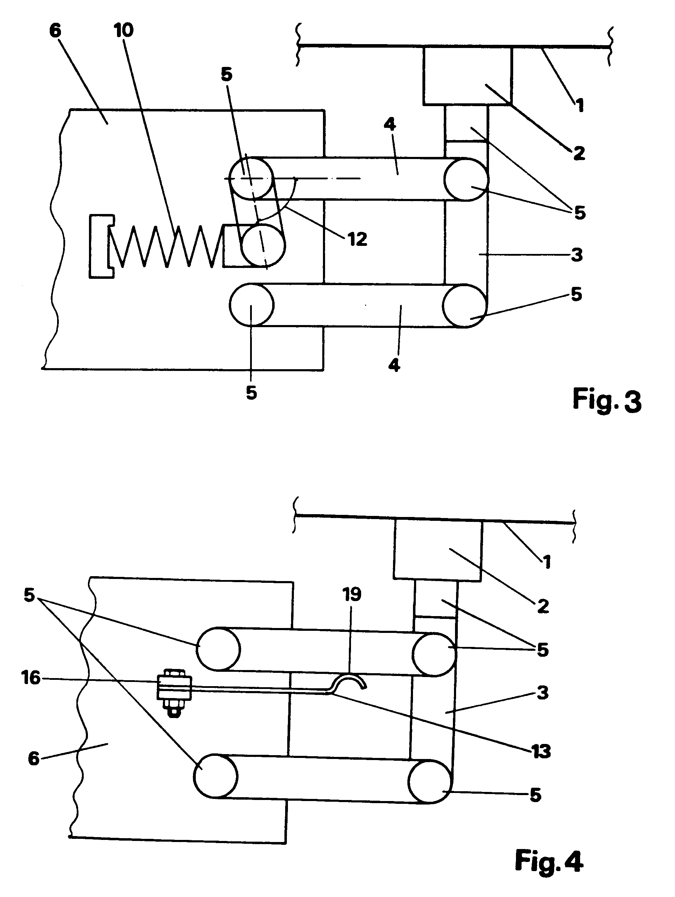

Fig. 3 zeigt eine einzeln gefederte Schleifstückaufhängung unter Verwendung einer Druckfeder (10). Die Wahl des Winkelhebels (12) erlaubt die Gestaltung der Federungskennlinie, die hier einen progressiven Verlauf hat.

Fig. 4 zeigt eine einzeln gefederte Schleifstückaufhängung unter Verwendung einer Biegefeder (13), z. B. Blattfeder oder Stabfeder. Eine zur Dämpfung benutzte Gleitfläche (19) wird durch die Feder und die Unterfläche des Trägerlenkers gebildet. Bei der Federbewegung gleitet die Feder am Trägerlenker entlang, die dabei auftretende Reibung wird zur Dämpfung herangezogen. Die Einstellung der Federkraft kann durch Längsverschiebung der Biegefeder in der Einspannung (16) erfolgen.

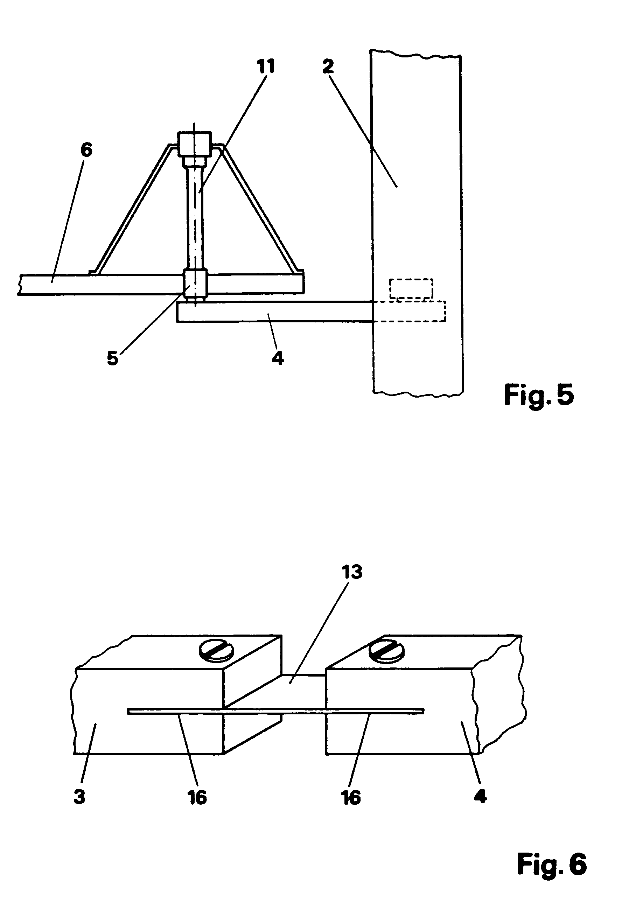

In Fig. 5 ist die Verwendung eines Drehstabes als Federelement der einzeln gefederten Schleifstückaufhängung dargestellt.

Fig. 6 zeigt ein Traggelenk, das dadurch gebildet wird, daß eine Blattfeder (13) als Biegefeder starre Teile der Schleifstückaufhängung, wie z. B. einen Schleifstückträger (3) und einen Trägerlenker (4), untereinander verbindet. Das so gebildete Gelenk ist ein Scharniergelenk mit hoher Seitensteifigkeit, wie es für die Funktion der Traggelenke der einzeln gefederten Schleifstückaufhängung notwendig ist. Anstelle einer Blattfeder können auch zwei oder mehrere stabförmige Biegefedern je Gelenk verwendet werden. Die Einspannung (16) ist jedoch bei der Blattfeder einfacher zu realisieren. Es ist neben der hier gezeigten Klemmung auch jede andere Befestigung der Biegefedern möglich.

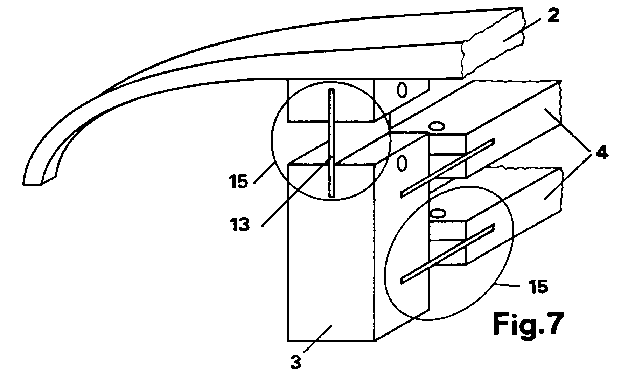

In Fig. 7 ist der distale Teil einer einzeln gefederten Schleifstückaufhängung dargestellt. Die Traggelenke zwischen den Trägerlenkern (4) und dem Schleifstückträger (3), sowie das Traggelenk zwischen Schleifstückträger (3) und Schleifstück (2) sind als Biegefedergelenke (15) unter Verwendung von Blattfedern (13) ausgebildet. Der in Fig. 7 abgebildedete Schleifstückträger (3) bildet zusammen mit dem am anderen, in Fig. 7 nicht dargestellten Ende des Schleifstücks (2) befindlichen Schleifstückträger ebenfalls eine Parallelogrammführung. Der beim einseitigen Einfedern des Schleifstücks benötigte Längenausgleich wird durch die Blattfeder (13) des zwischen Schleifstück und Schleifstückträger angeordneten Traggelenks ermöglicht.

## Patentansprüche

1. Wippe für Stromabnehmer elektrisch angetriebener Fahrzeuge mit Oberleitungsversorgung, die bezüglich ihrer Lage zum Fahrdraht (1) geführt wird und die mit einzeln gefederten Schleifstückaufhängungen ausgestattet ist, die aus einem Schleifstückträger (3) und einer damit verbundenen Parallelogrammführung bestehen, welche starre Trägerlenker (4) aufweist, die jeweils ein am Schleifstückträger (3) auf der einen Seite und ein am Wippenchassis (6) auf der anderen Seite angeordnetes Traggelenk (5) verbinden, wobei die Kräfte von Federn (9,10,13) an zumindest einem Punkt eines Trägerlenkers (4) oder Schleifstückträgers (3) je Schleifstückaufhängung eingeleitet werden und der zweite Angriffspunkt jeder Feder (9,10,13) am Wippenchassis (6), an einem weiteren Trägerlenker (4) oder am Schleifstückträger (3) liegt,
**dadurch gekennzeichnet**, daß ein Trägerlenker (4) jeder Schleifstückaufhängung ein in Bezug auf die Feder (9,10,13) zwei- oder mehrarmiger Hebel ist und die Angriffspunkte der Feder am Trägerlenker (4) derart angeordnet sind, daß durch ihre Wahl die Federkraft und/oder der einerseits durch die Linie zwischen den Traggelenken (5) an den Enden des jeweiligen Trägerlenkers (4) und andererseits durch die Linie zwischen dem Traggelenk (5) am Wippenchassis (6) und dem Angriffspunkt der Feder (9,10) am Trägerlenker (4) gebildete Hebelwinkel bestimmt wird.

2. Wippe nach Anspruch 1, **dadurch gekennzeichnet,** daß der Angriffswinkel der Feder (9) und der Hebelwinkel (12) zur Verlaufsgestaltung der Federungskennlinie gewählt sind.

3. Wippe nach Anspruch 1 oder 2, **dadurch gekennzeichnet,** daß die Angriffspunkte der Feder (9) fest, in Stufen (14a) und/oder kontinuierlich (14b) einstellbar ausgebildet sind.

4. Wippe nach einem der vorangehenden Ansprüche, **dadurch gekennzeichnet**, daß zur Dämpfung der Schleifstückaufhängung Traggelenke (5) der Parallelogrammführung als Gleitlager ausgeführt sind oder die gelenkig verbundenen Teile mit gegeneinander gleitenden Flächen (19) ausgestattet oder mit solchen verbunden sind.

5. Wippe nach einem der vorangehenden Ansprüche, **dadurch gekennzeichnet,** daß zur Dämpfung der Schleifstückaufhängung pneumatische, hydraulische oder sonstige Dämpfungselemente vorgesehen sind, durch deren Befestigungspunkte eine Hebelwirkung auf den Trägerlenker (4) erfolgt.

6. Wippe nach einem der vorangehenden Ansprüche, **dadurch gekennzeichnet**, daß Traggelenke (5) der Parallelogrammführung durch zumindest eine Biegefeder (13) gebildet werden, die an gelenkig zu verbindenden Teilen befestigt sind.

7. Wippe nach einem der vorangehenden Ansprüche, **dadurch gekennzeichnet**, daß zur Dämpfung der Kippbewegung der Wippe zumindest ein Anlenkpunkt der über den Oberarm (8) im Scheitelgelenk (7) und eine Lenkerstange (17) angelenkten Wippe nach Art eines Traggelenks (5) als Gleitlager ausgebildet oder mit Gleitflächen ausgestattet oder verbunden ist.

8. Wippe nach Anspruch 4 oder 7, **dadurch gekennzeichnet**, daß die Materialpaarung beim Gleitlager oder bei den gleitenden Flächen durch Reibung eine Dämpfung der Schleifstückaufhängung bewirkt, und daß ferner eine Dämpfung durch die Adhäsion oder Viskosität eines Stoffes zustande kommt, der zwischen die gleitenden Flächen sowie in jedes ein Traggelenk (5) bildende Lager eingebracht ist.

9. Wippe für Stromabnehmer elektrisch angetriebener Fahrzeuge mit Oberleitungsversorgung, die bezüglich ihrer Lage zum Fahrdraht (1) geführt wird und die mit einzeln gefederten Schleifstückaufhängungen ausgestattet ist, die aus einem Schleifstückträger (3) und einer damit verbundenen Parallelogrammführung bestehen, welche starre Trägerlenker (4) aufweist, die jeweils ein am Schleifstückträger (3) auf der einen Seite und ein am Wippenchassis (6) auf der anderen Seite angeordnetes Traggelenk (5) verbinden, wobei die Kräfte von Federn (9,10,13) an zumindest einem Punkt eines Trägerlenkers (4) oder Schleifstückträgers (3) je Schleifstückaufhängung eingeleitet werden und der zweite Angriffspunkt jeder Feder (9,10,13) am Wippenchassis (6), an einem weiteren Trägerlenker (4) oder am Schleifstückträger (3) liegt,
**dadurch gekennzeichnet,** daß die Traggelenke als Scharniergelenk mit einer den starren Trägerlenker (4) mit dem Schleifstückträger (3) bzw. mit dem Wippenchassis (6) verbindenden Biegefeder (13) ausgebildet sind.

## Claims

1. Pantograph for current collectors of electrically propelled vehicles with an overhead power supply which is guided as regards its position with respect to the contact wire (1) and which is equipped with individually sprung collector shoe attachments, which comprise a collector shoe support (3) and a parallelogram linkage connected thereto, which has rigid support arms (4), which each connect a support joint (5) arranged on the collector shoe carrier (3) on the one side and a support joint (5) arranged on the pantograph chassis (6) on the other side, whereby the forces of springs (9,10,13) are introduced at at least one point per collector shoe attachment on a support arm (4) or collector shoe carrier (3) and the second point of engagement of each spring (9,10,13) on the pantograph chassis (6) is on a further support arm (4) or on the collector shoe carrier (3), characterised in that one support arm (4) of each collector shoe attachment is a two- or multi- armed lever with respect to the spring (9,10,13) and the points of engagement of the springs on the carrier arm (4) are so arranged that by virtue of their selection the spring force and/or the lever angle defined by the line between the support joints (5) at the ends of the respective carrier arm (4) on the one hand and on the other hand by the line between the support joint (5) on the pantograph chassis (6) and the point of engagement of the spring (9,10) on the support arm (4) is determined.

2. Pantograph as claimed in claim 1, characterised in that the angle of engagement of the spring (9) and the lever angle (12) are selected to shape the spring characteristic.

3. Pantograph as claimed in claim 1 or 2, characterised in that the points of engagement of the spring (9) are constructed to be fixed, or adjustable in stages (14a) and/or continuously (14b).

4. Pantograph as claimed in one of the preceding claims, characterised in that in order to damp the collector shoe attachment, support joints (5) of the parallelogram linkage are constructed as sliding bearings or the pivotally connected members are equipped with mutually sliding surfaces (19) or are connected to such surfaces.

5. Pantograph as claimed in one of the preceding claims, characterised in that to damp the collector shoe attachment, pneumatic, hydraulic or other damping elements are provided, whose fastening points result in a lever action on the support arm (4).

6. Pantograph as claimed in one of the preceding claims, characterised in that support joints (5) of the parallelogram linkage are constituted by at least one flexible spring (13) which are secured to members which are to be pivotally connected.

7. Pantograph as claimed in one of the preceding claims, characterised in that to damp the tilting movement of the pantograph, at least one pivot point of the pantograph, which is pivoted via the upper arm (8) in the crown joint (7) and a guide rod (17), is constructed in the manner of a support joint (5) as a sliding bearing or is provided with or connected to sliding surfaces.

8. Pantograph as claimed in claim 4 or 7, characterised in that the material pairing in the sliding bearing or in the sliding surfaces results in damping of the collector shoe attachment by friction and that further damping occurs due to the adhesion or viscosity of a material which is introduced between the sliding surfaces and into each bearing forming a support joint (5).

9. Pantograph for current collectors of electrically propelled vehicles with an overhead power supply, which is guided as regards its position with respect to the contact wire (1) and which is equipped with individually sprung collector shoe attachments, which comprise a collector shoe support (3) and a parallelogram linkage connected thereto, which has rigid support arms (4), which each connect a support joint (5) arranged on the collector shoe carrier (3) on the one side and a support joint (5) arranged on the pantograph chassis (6) on the other side, whereby the forces of springs (9,10,13) are introduced at at least one point per collector shoe attachment on a support arm (4) or collector shoe carrier (3) and the second point of engagement of each spring (9,10,13) on the pantograph chassis (6) is on a further support arm (4) or on the collector shoe carrier (3), characterised in that the support joints are constructed as hinge joints with a flexible spring (13) connecting the rigid carrier arm (4) to the collector shoe carrier (3) or to the pantograph chassis (6).

## Revendications

1. Pantographe pour prise de courant de véhicules à moteur électrique à alimentation par ligne aérienne, qui est guidé en fonction de sa position par rapport au conducteur aérien (1) et qui est réalisé avec des suspensions élastiques individuelles du patin de frottement, constituées d'un support (3) de patin et d'un guidage à parallélogramme qui lui est relié et qui présente des bras porteurs rigides (4), chacun reliant une articulation porteuse (5) disposée, d'un côté, sur le support (3) de la pièce frottante et, de l'autre côté, sur le châssis (6) du pantographe, étant entendu que les forces exercées par des ressorts (9, 10, 13) sont appliquées en au moins un point d'un bras porteur (4), ou d'un support (3) de patin, pour chacune des suspensions de patin, et étant entendu que le deuxième point de fixation de chacun des ressorts (9, 10, 13) est situé sur te châssis (6) du pantographe, sur un autre bras porteur (4), ou sur le support (3) du patin,
caractérisé en ce qu'un bras porteur (4) de chaque suspension de patin est un levier à deux ou plusieurs bras pour les ressorts (9, 10, 13), et que les points d'attaque des ressorts sur le bras porteur (4) sont disposés de telle façon que, par leur choix, on puisse déterminer la force des ressorts et/ou l'angle de levier, formé, d'une part, par la ligne reliant les articulations porteuses (5) aux extrémités de chacun des bras porteurs (4) et, d'autre part, par la ligne passant entre l'articulation porteuse (5) sur le châssis (6) du pantographe et le point d'attaque du ressort (9, 10) sur le bras porteur (4).

2. Pantographe suivant la revendication 1, caractérisé en ce que l'angle d'attaque du ressort (9) et l'angle de levier (12) sont choisis pour donner la forme du tracé de la courbe caractéristique du ressort.

3. Pantographe suivant la revendication 1 ou la revendication 2, caractérisé en ce que les points d'attaque du ressort (9) sont réalisés de façon fixe, de façon à permettre un réglage, par degrés (14a) et/ou en continu (14b).

4. Pantographe suivant l'une des revendications précédentes, caractérisé en ce que, pour l'amortissement de la suspension de patin, des articulations porteuses (5) du guidage par parallélogramme sont réalisées sous la forme de paliers glissants, ou en ce que les pièces reliées par articulation sont réalisées avec des surfaces (19) glissant les unes par rapport aux autres ou sont reliées à de telles surfaces.

5. Pantographe suivant l'une des revendications précédentes, caractérisé en ce que, pour l'amortissement de la suspension de patin, il est prévu des organes amortisseurs pneumatiques, hydrauliques ou autres, dont les points de fixation produisent un effet de levier sur les bras porteurs (4).

6. Pantographe suivant l'une des revendications précédentes, caractérisé en ce que des articulations porteuses (5) du guidage par parallélogramme sont réalisées par au moins un ressort travaillant à la flexion (13), qui sont fixées à des pièces à raccorder par articulation.

7. Pantographe suivant l'une des revendications précédentes, caractérisé en ce que, pour l'amortissement du mouvement de basculement du pantographe, au moins un point d'articulation du pantographe, articulé par son bras supérieur (8) dans l'articulation située au sommet (7) et par un bras articulé (17), est réalisé à la façon d'une articulation porteuse (5) sous la forme d'un palier glissant, au bien est conçu avec des surfaces de glissement, ou est relié à elle.

8. Pantographe suivant la revendication 4 ou la revendication 7, caractérisé en ce que les matériaux appariés du palier glissant ou des surfaces de glissement provoquent, par frottement, un amortissement de la suspension de patin, et en ce que, de plus, il se produit un amortissement du fait de l'adhérence ou de la viscosité d'un matériau qui est introduit entre les surfaces de glissement, ainsi que dans chacun des paliers formant les articulations porteuses (5).

9. Pantographe pour prise de courant de véhicules à moteur électrique à alimentation par ligne aérienne, qui est guidé en fonction de sa position par rapport au conducteur aérien (1) et qui est réalisé avec des suspensions élastiques individuelles du patin de frottement, constituées d'un support (3) de patin et d'un guidage à parallélogramme qui lui est relié et qui présente des bras porteurs rigides (4), chacun reliant une articulation porteuse (5) disposée, d'un côté, sur le support (3) de la pièce frottante et, de l'autre côté, sur le châssis (6) du pantographe, étant entendu que les forces exercées par des ressorts (9, 10, 13) sont appliquées en au moins un point d'un bras porteur (4), ou d'un support (3) de patin, pour chacune des suspensions de patin, et étant entendu que le deuxième point de fixation de chacun des ressorts (9, 10, 13) est situé sur le châssis (6) du pantographe, sur un autre bras porteur (4), ou sur le support (3) du patin,
caractérisé en ce que les articulations porteuses (5) sont réalisées sous la forme d'une articulation à charnière comportant un ressort travaillant à la flexion (13), reliant respectivement le bras porteur rigide (4) au support (3) de patin et au châssis (6) du pantographe.
